# EUROPEAN PATENT APPLICATION

(11) **EP 2 581 959 A2**
(43) Date of publication of application: **17.04.2013**
(21) Application number: 12177033.3
(22) Date of filing: 19.07.2012
(51) Int. Cl.: H01M 2/02, H01M 2/04, H01M 2/34

(54) **Secondary battery**

(30) Priority: 18.05.2012 US 201213475838; 12.10.2011 US 201161546416 P
(71) Applicant: Samsung SDI Co., Ltd., Gyeonggi-do (KR)
(72) Inventor: YONG, Jun-Sun, Chungcheongbuk-do (KR); KIM, Andrew, Cheonan-Si, Chungcheongbuk-do (KR); LEE, Sang-Jin, Gyeonggi-do (KR); ROH, Sae-Weon, Gyeonggi-do (KR); PARK, Sang-Jin, Gyeonggi-do (KR)
(74) Representative: Mounteney, Simon James

(57) **Abstract**

Provided is a secondary battery including a cap plate that seals a case housing an electrode assembly, and includes a conductive member and a first insulating portion which conform to each other.

## Description

### [Technical Field of the Invention]

Technologies for mobile devices, such as mobile phones or notebook computers, have been constantly developed and the production of such devices has continually increased. Thus, demand for secondary batteries as an energy source has increased significantly. For safety reasons, a secondary battery includes a safety device for performing a protection operation, such as detecting a malfunction, for example, over-heating or flow of excess current, or blocking a current flow.

### [Detailed Description of the Invention]

An embodiment of the present invention includes a secondary battery that can be assembled via a simple operation due to use of a cap plate integrally formed with an insulating portion.

Another embodiment of the present invention includes a secondary battery that can be made compact due to increased space efficiency for mounting parts.

### [Means for Achieving Technical Goal]

To address the goals and other related goals, a secondary battery according to the present invention includes: a cap plate that seals a case housing an electrode assembly, and includes a conductive member and a first insulating portion which conform to each other via a series of protrusions, for example, in a complementary uneven pattern. The secondary battery according to the present invention preferably comprises a safety device including a first lead supported on the first insulating portion; and an electrode terminal that electrically connects the first lead to the electrode assembly.

For example, series of protrusions, which may bean uneven pattern, may be formed at an interface between the conductive member and the first insulating portion.

For example, the conductive member and the first insulating portion may each have protrusions having increasing widths in their protruding directions.

For example, the protrusions may have a complementary dove-tail shape to prevent the conductive member and the first insulating portion from separating from each other.

For example, the cap plate may be an insert molded product in which the conductive member is integrated with the first insulating portion.

For example, the electrode terminal may fix the first lead on the first insulating portion by passing through the first lead and the first insulating portion.

For example, the first insulating portion may extend in a passing direction of the electrode terminal. Preferably, upper and lower ends of the electrode terminal that are arranged along the passing direction of the electrode terminal extend in a surface direction of the cap plate.

For example, the first insulating portion may be integrally formed as a unit. For example, the insulating portion comprises top and bottom portions joined by a connecting portion and all portions are integrally formed.

For example, an upper flange may be formed at an upper end of the electrode terminal which protrudes from the first insulating portion to fix the first lead by compression.

For example, a lower flange may be formed at a lower end of the electrode terminal to form a surface contact with the electrode assembly.

For example, an area of the lower flange may be wider than an area of the upper flange.

For example, the electrode terminal may be formed on a position that is eccentric with respect to a central position of the cap plate.

For example, the cap plate may further include a second insulating portion that supports a second lead of the safety device.

For example, the second insulating portion may conform to the conductive member via a series of protrusions, for example, in a complementary uneven pattern.

For example, the conductive member and the second insulating portion may each have protrusions having increasing widths in their protruding directions.

For example, the uneven pattern may have a complementary dove-tail shape to prevent the conductive member and the second insulating portion from separating from each other.

For example, the first insulating portion is formed of a material that is used to form the second insulating portion.

For example, the safety device includes a safety device body connected between the first and second leads, and the safety device body is disposed on a portion of the conductive member between the first and second insulating portions.

### [Effect of the Invention]

According to the present invention, due to the use of a cap plate formed by integrating two materials having different electrical characteristics, an electrode terminal and a safety device may be supported while being insulated. Accordingly, there is no need for using a separate insulating element, and thus, the entire assembly process of the secondary battery may be simplified.

Also, because the electrode terminal has different upper and lower flange areas, a terminal plate for securing a sufficient welding area between the electrode assembly and the electrode terminal is not needed.

Also, because the electrode terminal that has a portion protruding from an upper surface of the cap plate is eccentrically disposed with respect to a central position of the cap plate, a mounting space on the cap plate may be increased, and for example, electrical parts may be compactly mounted on the cap plate.

### [Brief Description of the Drawings]

FIG. 1 is an exploded perspective view of a secondary battery according to an embodiment of the present invention.
FIG. 2 is an enlarged exploded perspective view of a portion of the secondary battery of FIG. 1.
FIG. 3 is a cross-sectional view taken along a line III-III of FIG. 2.
FIG. 4 is an enlarged cross-sectional view of a portion of the secondary battery of FIG. 3.
FIG. 5 is an enlarged cross-sectional view of a portion V of FIG. 4.
FIGS. 6 and 7 show perspective views illustrating first and second insulating portions.

### [Explanation of Reference numerals designating the Major Elements of the Drawings]

- 11:: first electrode tab
- 13:: negative electrode plate
- 15:: separator
- 110:: cap plate
- 110a:: conductive member member
- 111:: first insulating portion portion
- 111p:: protrusion of first insulating portion portion
- 112:: second insulating portion portion
- 115:: safety vent
- 130:: safety device
- 132:: second lead of safety device
- 140:: stiffener
- 150a:: upper flange of electrode terminal
- 150b:: lower flange of electrode terminal
- 160:: circuit portion portion

- 162:: second connection member of circuit portion 165: outer connection terminal

- P1:: first position
- P3:: third position

- 12:: second electrode tab
- 14:: positive electrode plate
- 20:: case
- 110':: through-hole of electrode terminal
- 110ap:: protrusion of conductive

- 111a:: upper end of first insulating
- 111b:: lower end of first insulating

- 112p:: protrusion of second insulating

- 120:: heat transmission member
- 131:: first lead of safety device
- 135:: safety device body
- 150:: electrode terminal

- 161:: first connection member of circuit

- P2:: second position
- D:: uneven pattern
W1: width of upper flange of electrode terminal W2: width of lower flange of electrode terminal

Hereinafter, embodiments of the present invention will be described in detail with reference to drawings attached to the present specification.

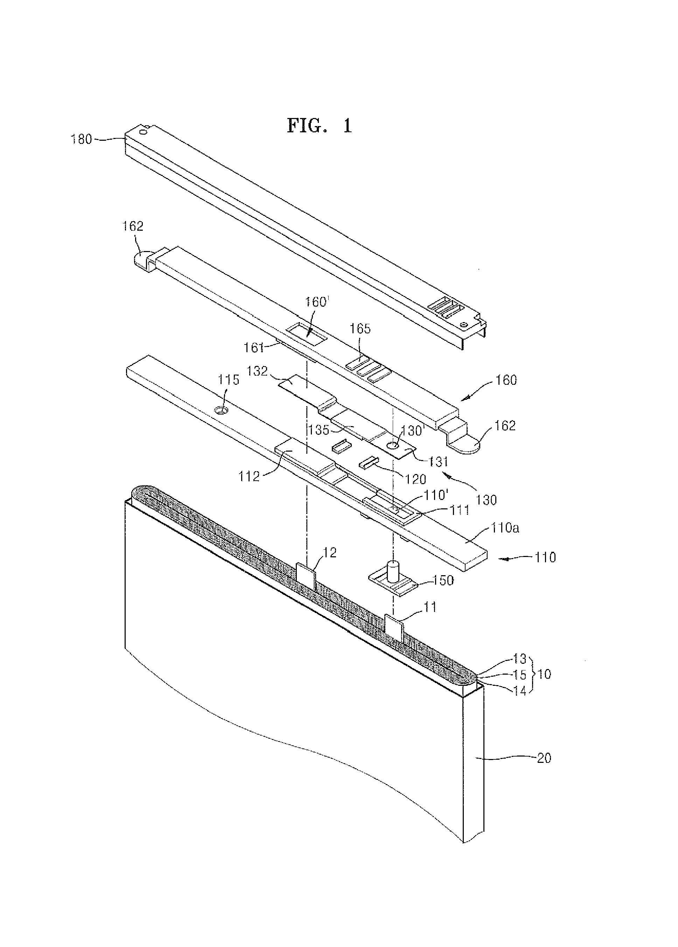

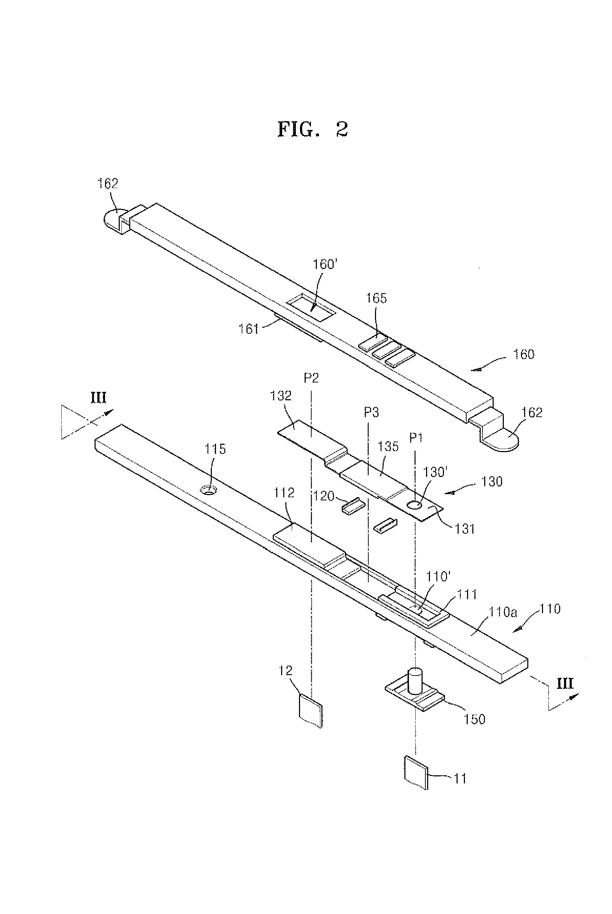

FIG. 1 is an exploded perspective view of a secondary battery according to an embodiment of the present invention. FIG. 2 is an enlarged exploded perspective view of a portion of the secondary battery of FIG. 1.

Referring to FIGS. 1 and 2, the secondary battery includes a case 20 that houses an electrode assembly 10, a cap plate 110 that closes an open end of the case 20, and a safety device 130 that is mounted on the cap plate 110 and performs a safety operation in response to an abnormal operation, such as over-heating or flow of excess current.

The electrode assembly 10 may preferably be formed by interposing a separator 15 between a negative electrode plate 13 and a positive electrode plate 14 to separate the negative electrode plate 13 from the positive electrode plate 14, and then winding the negative electrode plate 13, the positive electrode plate 14, and the separator 15 in a jelly-roll shape. Each of the negative electrode plate 13 and the positive electrode plate 14 includes an electrode active material. The negative electrode plate 13 and the positive electrode plate 14 may preferably respectively include first and second electrode taps 11 and 12 that allow electrical charges formed due to a chemical reaction to flow out of the electrode assembly 10.

The electrode assembly 10 may preferably be immersed in an electrolyte (not shown) inside the case 20. An opening of the case 20 may preferably be shielded by the cap plate 110 after the electrode assembly 10 is placed therein. Contact portions of the cap plate 110 and the case 20 may preferably be firmly coupled to each other by welding, for example, laser welding.

For example, in an embodiment, the first electrode tap 11 of the electrode assembly 10 may preferably contact an electrode terminal 150 that protrudes through the cap plate 110, and the second electrode tap 12 of the electrode assembly 10 may preferably contact the cap plate 110. The electrode terminal 150 is coupled to the cap plate 110 while being insulated from the cap plate 110, and protrudes through the cap plate 110 to electrically connect the electrode assembly 10 to the safety device 130.

In an embodiment, the safety device 130 may preferably be disposed on the cap plate 110 and may preferably regulate or block charge and discharge currents during malfunctioning, for example, during occurrence of overheat or excess current. The safety device 130 may preferably have a positive temperature coefficient (PTC) and may preferably include a fuse, a current block device, a bi-metal, or the like. The safety device 130 may preferably include a safety device body 135 and first and second leads 131 and 132 extending in opposite directions from the safety device body 135.

In an embodiment, the cap plate 110 may preferably have a safety vent 115 of a rupturable type so that when an inner pressure of the case 20 excesses a set point, a gas discharge path is provided.

In an embodiment, a circuit portion 160 may preferably be mounted on the cap plate 110. The circuit portion 160 may preferably include an interconnection pattern (not shown) that enables electric connection with an external device (not shown) and forms a charge and discharge current path. On a surface of the circuit portion 160, an outer connection terminal 165 for electrical connection with an external device may preferably be formed, and first and second connection members 161 and 162 may preferably be disposed on the other surface. For example, the first connection member 161 may preferably contact the second lead 132 of the safety device 130, which is a negative electrode terminal. For example, by using a welding electrode (not shown) protruding through an opening 160' of the circuit portion 160, the first connection member 161 may preferably be coupled to the second lead 132 by welding. The second connection member 162 may preferably contact the cap plate 110 as a positive electrode terminal.

Also, in an embodiment, the circuit portion 160 may preferably function as a protection member for preventing the occurrence of an overcharge, excess current, over-discharge, or the like, together with the safety device 130. An upper cover 180 for housing the circuit portion 160 may preferably be disposed on the cap plate 110.

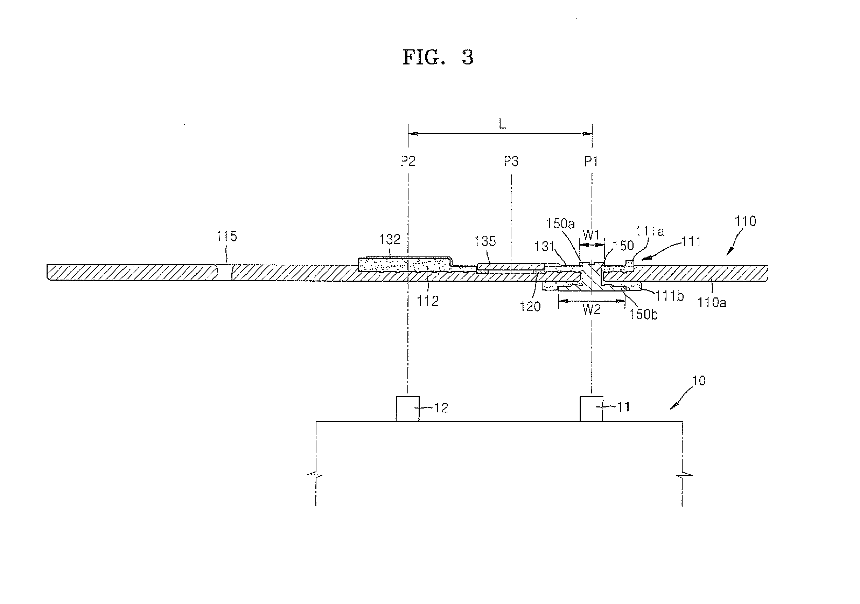

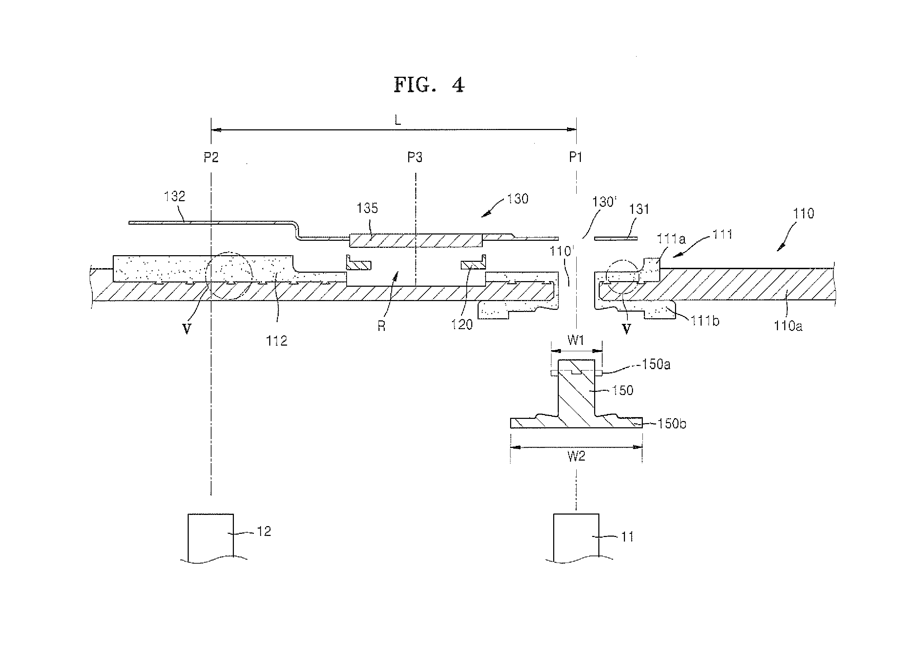

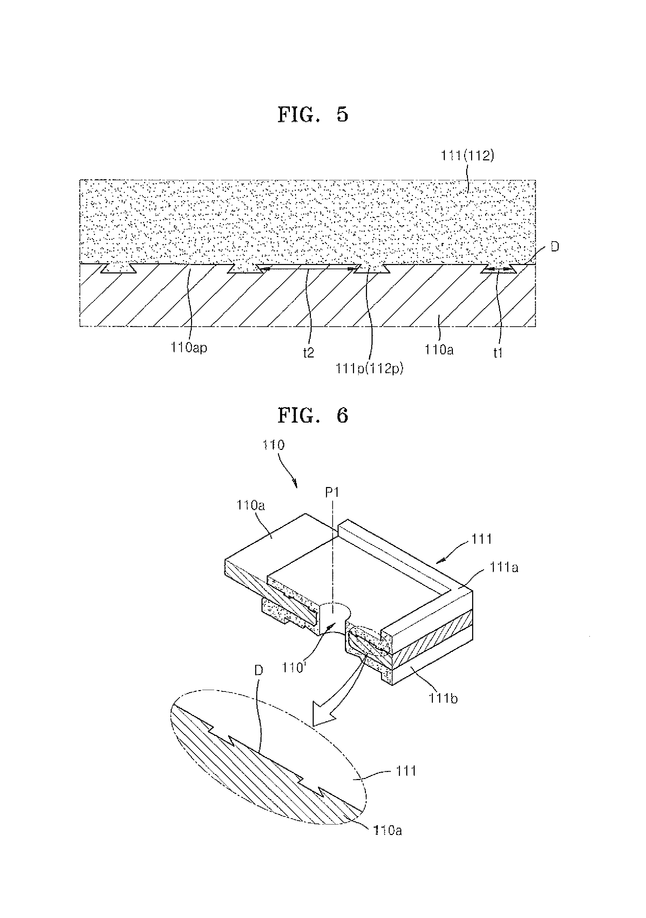

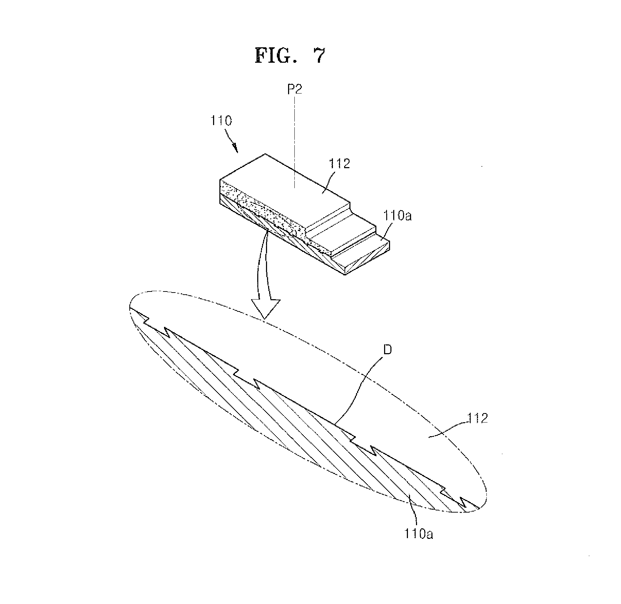

FIG. 3 is a cross-sectional view taken along a line III-III of FIG. 2. FIG. 4 is an enlarged cross-sectional view of a portion of the secondary battery of FIG. 3. FIG. 5 is an enlarged cross-sectional view of a portion V of FIG. 4. FIGS. 6 and 7 show perspective views illustrating first and second insulating portions 111 and 112.

Referring to FIG. 4, the cap plate 110 is a plate formed by integrating two materials having different electrical characteristics. The cap plate 110 includes a conductive member 110a that forms an overall skeleton of the cap plate 110 and the first and, preferably, second insulating portions 111 and 112 that conform to the conductive member 110a.

Referring to FIGS. 4 and 5, in an embodiment, the first and second insulating portions 111 and 112 may preferably conform to the conductive member 110a via a series of protrusions, preferably in a complementary uneven pattern. For example, a dove-tail shaped uneven pattern D may preferably be formed at an interface of the conductive member 110a and the first and second insulating portions 111 and 112 where the conductive member 110a is complementarily jointed with the first and second insulating portions 111 and 112 to prevent separation from each other. The cap plate 110 may preferably be formed as an insert molded product.

In preferred embodiments of the present invention the conductive member, the first insulating portion and/or the second insulating portion preferably each comprise between 1 and 20, preferably 2 and 15, and preferably between 3 and 10 protrusions in the series.

In an embodiment, the conductive member 110a may preferably be connected to the second electrode tap 12 of the electrode assembly 10 to form a positive electrode terminal. For example, the second electrode tap 12 of the electrode assembly 10 may preferably be coupled to a lower surface of the conductive member 110a by welding, and an exposed portion of the conductive member 110a may preferably function as a positive electrode terminal.

In an embodiment, the first and second insulating portions 111 and 112 may preferably respectively include first and second insulating portions 111 and 112 formed on first and second positions P1 and P2 on the cap plate 110. The first and second insulating portions 111 and 112 may preferably be formed on a surface of the conductive member 110a or may preferably pass through the conductive member 110a.

In preferred embodiments of the present invention, the first insulating portion may be integrally formed as a unit. Preferably, the second insulating portion if present is also integrally formed as a unit. For example, the insulating portions comprise top and bottom portions joined by a connecting portion and all portions are integrally formed. By "integrally formed as a unit" it is meant that the insulating portion is a single, seamless component, i.e. the top, bottom and connecting portions are all parts of the same single unit, these terms refer to sections of the single integral unit rather than individual parts. By forming the insulation portions as single units the number of manufacturing steps is decreased and the likelihood of failure of the insulating portion due to stress or strain is minimized as there are no seams along which or from which cracks may develop. In an embodiment, for example, the first insulating portion 111 may preferably be formed through the conductive member 110a along a through-hole 110' of the cap plate 110. However, the present invention is not limited thereto. In another embodiment, the first insulating portion 111 may preferably be formed on the conductive member 110a, not through the conductive member 110a.

In an embodiment, the first insulating portion 111 may preferably support the first lead 131 of the safety device 130 while insulating the first lead 131. The first insulating portion 111 electrically insulates the first lead 131 of the safety device 130 from the conductive member 110a and physically supports the first lead 131 of the safety device 130. The first insulating portion 111 prevents a short between a positive electrode and a negative electrode, that is, between the first lead 131 that is electrically connected to the first electrode tap 11 of the electrode assembly 10 and the conductive member 110a that is connected to the second electrode tap 12 of the electrode assembly 10.

In an embodiment, the electrode terminal 150 is inserted into the through-hole 110' of the first insulating portion 111. For example, the electrode terminal 150 may preferably be inserted from a lower surface of the first insulating portion 111 and an upper portion of the electrode terminal 150 which protrudes from an upper surface of the first insulating portion 111 may preferably be processed by caulking, spinning, or rivetting to form an upper flange 150a that is widened toward a circumference of the electrode terminal 150. The upper flange 150a may preferably fix the electrode terminal 150 on the cap plate 110 by compression.

In an embodiment, the electrode terminal 150 may preferably be inserted into a through-hole 130' of the first lead 131 of the safety device 130 and the electrode terminal 150 may preferably fix the first lead 131 by compression. The electrode terminal 150 fixes the first lead 131 on the first insulating portion 111 by compression and forms an electrical connection with the safety device 130. For example, the electrode terminal 150 may preferably be inserted into the through-hole 130' of the first lead 131 and the first lead 131 may preferably be fixed on the first insulating portion 111 by the upper flange 150a of the electrode terminal 150. In this case, welding between the electrode terminal 150 and the safety device 130 may preferably not be needed.

In an embodiment, the first lead 131 of the safety device 130 may preferably extend from the first position P1 where the first lead 131 is fixed on the first insulating portion 111 toward the third position P3 to be connected with the safety device body 135 disposed on the third position P3.

In an embodiment, the first insulating portion 111 may preferably support the electrode terminal 150 and the first lead 131 of the safety device 130 while insulating the electrode terminal 150 and the first lead 131, thereby preventing an electrical short between the electrode terminal 150 and the first lead 131 and the conductive member 110a.

In an embodiment, the first insulating portion 111 may preferably form the through-hole 110' of the cap plate 110, and may preferably extend toward a surrounding of the through-hole 110' and support the electrode terminal 150 and the first lead 131 while insulating the electrode terminal 150 and the first lead 131. The first insulating portion 111 extends along the through-hole 110', and upper and lower ends 111a and 111b of the first insulating portion 111 may preferably extend in a surface direction of the cap plate 110.

In an embodiment, the upper end 111a of first insulating portion 111 may preferably insulate the first lead 131 and the lower end 111b may preferably insulate a lower flange 150b of the electrode terminal 150. In this case, a portion of the first insulating portion 111 disposed in the through-hole 110' may preferably be integrated with the upper and lower ends 111a and 111b.

In an embodiment, besides the insulting function of the first insulating portion 111 with respect to the electrode terminal 150, the first insulating portion 111 may preferably have a gasket function for sealing the through-hole 110' of the cap plate 110. That is, the first insulating portion 111 seals the surrounding of the through-hole 110' while surrounding the electrode terminal 150 to prevent leakage of an electrolyte or permeation of external impurities through the through-hole 110'. For example, the electrode terminal 150 may preferably be forcedly inserted into the through-hole 110' of the first insulating portion 111, and if the first insulating portion 111 is formed of a resin-based material, the first insulating portion 111 may preferably firmly contact the circumference of the electrode terminal 150.

In an embodiment, the first insulating portion 111 may preferably conform to and may preferably be integrated with the conductive member 110a, and at the interface of the first insulating portion 111 and the conductive member 110a, the dove-tail shaped uneven pattern D may preferably form a stopper structure for preventing separation of the first insulating portion 111 and the conductive member 110a, thereby allowing the first insulating portion 111 and the conductive member 110a to be firmly coupled to each other.

Referring to FIG. 5, in an embodiment, the dove-tail shaped pattern D may preferably form a stopper structure for preventing separation of the first insulating portion 111 and the conductive member 110a at the interface therebetween. For example, protrusions 111 p and 110ap of the first insulating portion 111 and the conductive member 110a may preferably have gradually increasing widths t1 and t2 in their protruding directions. In preferred embodiments of the present invention t1 is less than t2, preferably t1 is between 15% and 75% of t2, and preferably t1 is between 20% and 50% of t2.

Referring to FIG. 3, in an embodiment, because the electrode terminal 150 protrudes through the first insulating portion 111, the electrode terminal 150 may preferably effectively fix the first lead 131 on the first insulating portion 111. In this case, a position (first position P1) of the electrode terminal 150 may preferably be a position (offset distance L) eccentric with respect to a central portion (second position P2) of the cap plate 110. Because the convex electrode terminal 150 is formed at the position (first position P1) eccentric with respect to the central portion (second position P2) of the cap plate 110, an installation space on the cap plate 110 may preferably be effectively used, and for example, electrical devices for controlling charge and discharge operations may preferably be compactly installable.

As described above, in an embodiment, because the electrode terminal 150 is formed on the offset first position P1 of the cap plate 110, a negative electrode terminal may preferably be formable on the central portion (second position P2) of the cap plate 110 by using the safety device 130 that extends from the first position P1 to the central portion (second position P2). That is, the safety device 130 may preferably extend from the first position P1 to the central portion (second position P2) of the cap plate 110 so that the second lead 132 may preferably form a negative electrode terminal on the central portion (second position P2) of the cap plate 110.

The electrode terminal 150 may preferably allow the electrode assembly 10 and the safety device 130 disposed on opposite sides of the cap plate 110 to be electrically connected to each other. For example, the electrode terminal 150 may preferably be electrically connected to the first lead 131 of the safety device 130 through the upper flange 150a and may preferably be electrically connected to the electrode assembly 10 through the lower flange 150b.

In an embodiment, the lower flange 150b of the electrode terminal 150 may preferably have a wider area than the upper flange 150a and may preferably provide a wide area for welding with the electrode assembly 10. That is, a width or radius W2 of the lower flange 150b may preferably be wider than width or radius W1 of the upper flange 150a. Due to the wider area of the lower flange 150b than the upper flange 150a, there is no need to use a terminal plate for increasing a welding area between the electrode terminal 150 and the electrode assembly 10. In preferred embodiments of the present invention W1 is between 15% and 60% of W2, preferably between 20% and 50%, preferably between 30% and 45%.

In an embodiment, the second insulating portion 112 supports the second lead 132 of the safety device 130 while insulating the second lead 132. The second insulating portion 112 may preferably be formed on the second position P2 of the cap plate 110, and for example, the central portion of the cap plate 110. The second insulating portion 112 may preferably be formed on the surface of the conductive member 110a that forms a skeleton of the cap plate 110.

The second insulating portion 112 may preferably conform to and may preferably be integrated with the conductive member 110a, and at an interface between the second insulating portion 112 and the conductive member 110a, the dove-tail shaped uneven pattern D may preferably form a stopper structure for preventing separation of the second insulating portion 112 and the conductive member 110a.

Referring to FIG. 5, in an embodiment, the dove-tail shaped pattern D forms a stopper structure for preventing separation of the second insulating portion 112 and the conductive member 110a at the interface therebetween. For example, protrusions 112p and 110ap of the second insulating portion 112 and the conductive member 110a may preferably have gradually increasing widths t1 and t2 in their protruding directions. As discussed above, preferably t1 is less than t2, preferably t1 is between 15% and 75% of t2, and preferably t1 is between 20% and 50% of t2.

Referring to FIG. 4, in an embodiment, the second lead 132 of the second insulating portion 112 may preferably be electrically connected to the first electrode tap 11 of the electrode assembly 10 through the electrode terminal 150 and may preferably form a negative electrode terminal. That is, the second lead 132 of the safety device 130 may preferably be exposed on the second insulating portion 112 to form a negative electrode terminal.

In an embodiment, the cap plate 110 may preferably be formed as an insert molded product that is formed by integrating the conductive member 110a forming a skeleton of the cap plate 110 with the first and second insulating portions 111 and 112 conforming to the conductive member 110a. For example, during insert molding, the conductive member 110a is temporally fixed at a predetermined position inside a mold frame (not shown) and then, a molten molding resin is loaded into the mold frame to form the cap plate 110 that includes the conductive member 110a and the first and second insulating portions 111 and 112 which are all integrated as one body. Through the insert molding, the first and second insulating portions 111 and 112 may preferably be simultaneously formed of the same material. For example, in an embodiment, the first and second insulating portions 111 and 112 may preferably be formed of a resin-based material.

In an embodiment, the conductive member 110a functions as a positive electrode terminal. Also, due to the integration of the conductive member 110a with the first and second insulating portions 111 and 112 that support the electrode terminal 150 and the safety device 130 which have polities opposite to that of the conductive member 110a while insulating the electrode terminal 150 and the safety device 130, a conventional process for disposing a separate insulating material on the cap plate 110 is not required. Also, due to the formation of a unit module in which the conductive member 110a is integrated with the first and second insulating portions 111 and 112, the whole assembly process for a secondary battery may be simplified.

In an embodiment, the safety device 130 incudes the first and second leads 131 and 132 supported by the first and second insulating portions 111 and 112, and the safety device body 135 interposed between the first and second leads 131 and 132. In an embodiment, the safety device body 135 may preferably be disposed in a recess R between the first and second insulating portions 111 and 112. That is, because the safety device body 135 is disposed on a portion of the conductive member 110a on which the first and second insulating portions 111 and 112 are not formed, the safety device body 135 precisely senses an inner temperature of the secondary battery.

In an embodiment, a heat transmission member 120 may preferably be interposed between the safety device body 135 and the cap plate 110 (in particular, the conductive member 110a). In an embodiment, the heat transmission member 120 may preferably be interposed between the safety device body 135 and the cap plate 110 to allow the safety device body 135 and the cap plate 110 to thermally contact each other.

In an embodiment, the heat transmission member 120 may preferably be formed of a flexible and thermally conductive material so that the heat transmission member 120 is smoothly deformed between the safety device body 135 and the cap plate 110 and firmly contacts the safety device body 135 and the cap plate 110. In an embodiment, also, the heat transmission member 120 may preferably include an adhesive material for firmly contacting the safety device body 135 and the cap plate 110. For example, the heat transmission member 120 may preferably be formed of a composite material, such as a mix sheet containing thermally conductive particles.

In another embodiment, the heat transmission member 120 may preferably be formed by application of thermally conductive silicone. For example, thermally conductive silicone is applied at a position on which the safety device body 135 is to be mounted, and then, another heat transmission member having a sheet shape is deposited thereon.

Meanwhile, insulating coating or an insulating film (not shown) may preferably be formed on a surface of the safety device body 135, and these insulating materials may preferably be integrated as an outer material with the safety device body 135.

It should be understood that the embodiments described therein should be considered in a descriptive sense only and not for purposes of limitation. Descriptions of features or aspects within each embodiment should typically be considered as available for other similar features or aspects in other embodiments.

## Claims

1. A secondary battery comprising:
a cap plate that seals a case housing an electrode assembly, and comprises a conductive member and a first insulating portion which conform to each other via a series of protrusions.

2. The secondary battery of claim 1 further comprising a safety device comprising a first lead supported on a first insulating portion; and
an electrode terminal that electrically connects the first lead to the electrode assembly.

3. The secondary battery of claim 1 or claim 2, wherein the protrusions of the conductive member and the first insulating portion have increasing widths in their protruding directions, optionally wherein the protrusions have a complementary dove-tail shape.

4. The secondary battery of any of claims 1 to 3, wherein the cap plate is an insert molded product in which the conductive member is integrated with the first insulating portion.

5. The secondary battery of any of claims 2 to 4, wherein the electrode terminal fixes the first lead on the first insulating portion by passing through the first lead and the first insulating portion.

6. The secondary battery of claim 5, wherein the first insulating portion extends in the passing direction of the electrode terminal.

7. The secondary battery of any of claims 1 to 6, wherein the insulating portion comprises top and bottom portions joined by a connecting portion and all portions are integrally formed.

8. The secondary battery of any of claims 2 to 7, wherein an upper flange is formed at an upper end of the electrode terminal which protrudes from the first insulating portion to fix the first lead by compression.

9. The secondary battery of any of claims 2 to 8, wherein a lower flange is formed at a lower end of the electrode terminal to form a surface contact with the electrode assembly.

10. The secondary battery of claim 9, wherein an area of the lower flange is wider than an area of the upper flange.

11. The secondary battery of any of claims 1 to 10, wherein the cap plate further comprises a second insulating portion that supports a second lead of the safety device.

12. The secondary battery of claim 11, wherein the second insulating portion conforms to the conductive member conform to each other via a series of protrusions, optionally wherein the protrusions of the conductive member and the second insulating portion having increasing widths in their protruding directions

13. The secondary battery of claim 12, wherein the protrusions have a complementary dove-tail shape.

14. The secondary battery of any of claims 11 to 13, wherein the first insulating portion is formed of a material that is used to form the second insulating portion.

15. The secondary battery of any of claims 11 to 14, wherein the safety device comprises a safety device body connected between the first and second leads, and the safety device body is disposed on a portion of the conductive member between the first and second insulating portions.
